# EUROPÄISCHE PATENTSCHRIFT

(11) **EP 2 287 506 B1**
(45) Veröffentlichungstag und Bekanntmachung des Hinweises auf die Patenterteilung: **24.07.2013**
(21) Anmeldenummer: 10008568.7
(22) Anmeldetag: 17.08.2010
(51) Int. Cl.: F16L 3/233, B65D 63/10

(54) **Kabelbinder**
Cable tie
Serre-câble

(30) Priorität: 17.08.2009 DE 102009037709
(43) Veröffentlichungstag der Anmeldung: 23.02.2011
(73) Patentinhaber: Illinois Tool Works Inc., Glenview, IL 60026-1215 (US)
(72) Erfinder: Helfrich, Ronnie, 74925 Epfenbach (DE); Dong, Cai Shu, 200241 Shanghai (CN)
(74) Vertreter: Gottschald, Jan

(56) Entgegenhaltungen:
- CA-A1- 2 168 588
- DE-A1- 10 212 987
- US-A1- 2003 135 958
- US-A1- 2008 083 094
- US-B1- 6 658 703

## Beschreibung

Die Erfindung betrifft ein Verschlusssystem der Art, welche üblicherweise als Kabelbinder bezeichnet wird, wobei als Kabelbinder bezeichnet Verschlusssysteme auch für andere Zwecke eingesetzt werden können als das Verbinden von Kabeln. Ebenso kann das Verschlusssystem gemäß der Erfindung für andere Zwecke als das Verbinden von Kabeln eingesetzt werden.

Ein herkömmlicher Kabelbinder umfasst ein Verschlussstück und ein mit dem Verschlussstück verbundenes Band, welches in eine Öffnung des Verschlussstücks einsteckbar ist, wobei eine Rastverbindung zwischen dem Band und dem Verschlussstück ein weiteres Verschieben des Bandes in die Einsteckrichtung erlaubt und ein Verschieben des Bandes entgegen der Einsteckrichtung blockiert.

Es hat sich gezeigt, dass das Einstecken des Bandes in manchen Gebrauchssituationen mit Schwierigkeiten verbunden ist. Bekannte Lösungsansätze hierfür basieren auf der Überlegung, das Einstecken des Bandes in zwei Einsteckrichtungen zu erlauben (siehe, die gattungsbildende DE 102 12 987, sowie die US 6, 65.8,703 B1, US 2008/083094 A1, CA 2 168 588 A1, US 2003/135958 A1).

Ferner hat sich gezeigt, dass es schwierig ist, einmal geschlossene Rastverbindungen zwischen Verschlussstück und Band wieder zu lösen.

Entsprechend ist es eine Aufgabe der vorliegenden Erfindung, ein Verbindungssystem bereitzustellen, bei welchem ein Band auf eine einfachere Weise in eine Öffnung des Verschlussstücks einsteckbar ist. Ferner ist es eine Aufgabe der vorliegenden Erfindung, ein Verbindungssystem bereitzustellen, welches im verbundenen Zustand leichter wieder lösbar ist.

Gemäß einer Ausführungsform der Erfindung umfasst ein Verbindungssystem ein sich in eine Längsrichtung erstreckendes Band mit wenigstens einer Längsseite, an welcher Rastrippen vorgesehen sind, und ein Verschlussstück, an welchem eine Öffnung vorgesehen ist, in die das Band in dessen Längsrichtung einsteckbar ist. Hierbei umfasst das Verschlussstück ein Paar von Rastkörpern, welche jeweils dazu ausgebildet sind, zusammen mit den Rastrippen des Bandes eine Rastverbindung bereitzustellen, wobei das Paar von Rastkörpern so angeordnet ist, dass beim Einstecken des Bandes in die Öffnung aus einer ersten Richtung einer der Rastkörper des Paars in Eingriff mit den Rastrippen des Bandes gelangt, um die Rastverbindung zu bilden, während beim Einstecken des Bandes in die Öffnung aus einer der ersten Richtung entgegengesetzten zweiten Richtung der andere Rastkörper in Eingriff mit den Rastrippen des Bandes gelangt, um die Rastverbindung zu schließen.

Gemäß der beschriebenen Ausfuhrungsform der Erfindung ist es möglich, das Band aus zwei möglichen Richtungen in die Öffnung einzuführen, um die gewünschte Verbindung zu schließen. Hierzu ist ein Paar von Rastkörpern vorgesehen, welche derart angeordnet sind, dass beim Einführen des Bandes aus der einen Richtung der eine Rastkörper die Rastverbindung bildet während beim Einführen des Bandes aus der anderen Richtung der andere Rastkörper die Rastverbindung bildet. Das Verbindungssystem zeichnet sich deshalb durch eine einfachere Handhabbarkeit aus.

Gemäß einer weiteren Ausführungsform der Erfindung umfasst ein Verbindungssystem ein sich in eine Längsrichtung erstreckendes Band, wobei an wenigstens einer Längsseite des Bandes Rastrippen vorgesehen sind, ein mit dem Band fest verbundenes Verschlussstück, an welchem eine Öffnung vorgesehen ist, in die das Band in dessen Längsrichtung hineinsteckbar ist, und welches wenigstens einen Rast-Körper umfasst, welcher bei eingestecktem Band in die Rastrippen des Bandes eingreift, eine Grifflasche, welche mit dem Verschlussstück fest verbunden ist und zwei Griffflächen mit jeweils einer Oberfläche von mehr als 1,5 cm mal 1,5 cm aufweist, und wobei sich das Band von einer der Grifflasche gegenüberliegenden Seite des Verschlussstücks in eine Erstreckungsrichtung der Griffflächen von dem Verschlussstück wegerstreckt, so dass das Verschlussstück, gesehen in Längsrichtung des Bandes, zwischen der Grifflasche und dem Band angeordnet ist.

Beim herkömmlichen Kabelbinder muss der Benutzer diesen zum Einführen des Bandes in die Öffnung des Verschlussstücks entweder an dem Verschlussstück selbst oder an dem Band festhalten, weshalb einiges an Fingerspitzengefühl notwendig ist, um das Band sicher in die Öffnung einzuführen.

Gemäß der beschriebenen Ausführungsform der Erfindung kann der Benutzter das Verbindungssystem einfach an der Grifflasche ergreifen und festhalten, während er das Band in die Öffnung des Verschlussstücks einführt. Indem sich die Grifflasche in eine der Erstreckungsrichtung des Bandes entgegengesetzte Richtung von dem Verschluss wegerstreckt ist auch gewährleistet, dass der Benutzer, der zum Beispiel die Grifflasche mit der einen Hand ergreift, freien Zugang zu der Öffnung hat, um in diese das Band mit der anderen Hand einzuführen. Das Verbindungssystem zeichnet sich auch deshalb durch eine vergleichsweise einfache Handhabbarkeit aus.

Erfindungsgemäß umfasst ein Verbindungssystem ein Verschlussstück mit einer Öffnung und ein Band, welches in die Öffnung einführbar ist, um eine Rastverbindung zu schließen, wobei eine Transversal-Führung für das Band in der Öffnung vorgesehen ist, welche zwei seitliche Führungsflächen aufweist, welche das Band am Rand stützen und welche mit einem Abstand voneinander so angeordnet sind, dass das Band in seiner Mitte nicht gestützt ist. Der Abstand der beiden seitlichen Führungsflächen voneinander ist größer als 70 % der Breite des Bandes. Ein Rastkörper ist zum Eingriff in die Rastrippen des Bandes zur Bildung der Rastverbindung vorgesehen, wobei der Rastkörper in einer Mitte des Bandes in die Rastrippen eingreift. Bei einem Zug auf das Band in eine der Einführrichtung entgegengesetzte Richtung kann sich das Band in Querrichtung durchbiegen, da es in der Mitte nicht durch die Führungsflächen gestützt ist. Bei Ausübung einer ausreichenden Zugkraft kann die Durchbiegung soweit zunehmen, bis die Rastverbindung gelöst wird, so dass das Band innerhalb der Öffnung in die Richtung bewegt werden kann, welche durch die Rastverbindung eigentlich blockiert wird. Insbesondere ist es möglich, die an der Rastverbindung beteiligten Komponenten derart aufeinander abzustimmen, dass bei Ausübung einer ausreichenden Kraft die Rastverbindung zerstört wird und das Band von der Rastverbindung plötzlich gänzlich freigegeben wird.

Ausführungsformen der Erfindung werden nachfolgend anhand von Figuren näher erläutert:
- Fig. 1: zeigt eine Ausführungsform eines Verbindungssystems in einer Draufsicht von vorne,
- Fig. 2: einen Teil des in Figur 1 gezeigte Verbindungssystems in einer Draufsicht von hinten,
- Fig. 3: eine Schnittdarstellung des Verbindungssystems im Querschnitt entlang einer Linie III-III in Figur 2,
- Fig. 4: eine der Figur 3 entsprechende Schnittdarstellung, wobei ein Band von vorne in eine Öffnung eines Verschlussstücks eingeführt ist,
- Fig. 5: eine der Figur 3 entsprechende Schnittdarstellung, wobei das Band von hinten in die Öffnung des Verschlussstücks eingeführt ist, und
- Fig. 6: ist eine Schnittdarstellung eines Teils des Verbindungssystems unter Belastung.

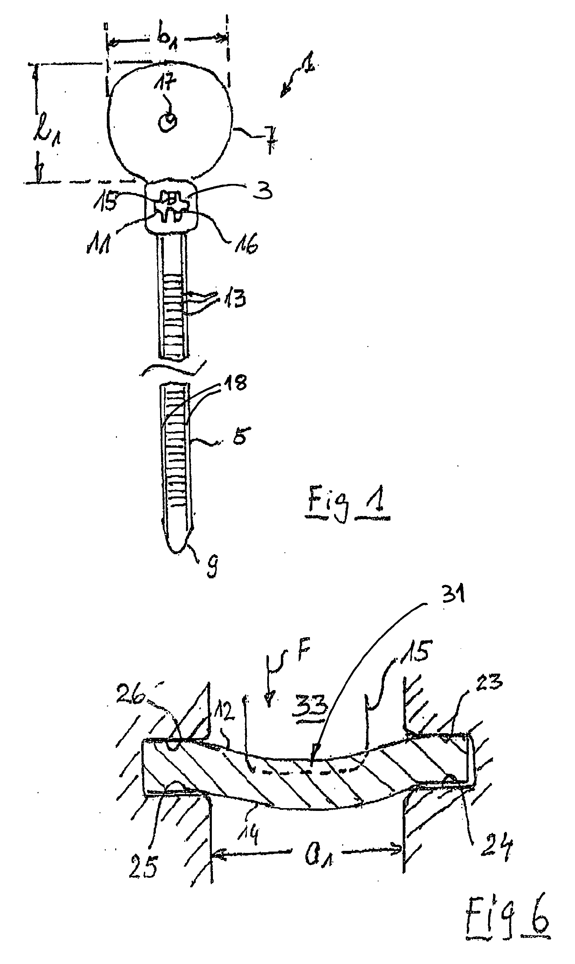

Figur 1 zeigt eine Ausführungsform eines Verschlusssystems 1, welches als Kabelbinder einsetzbar ist und auch für andere Verbindungszwecke als das Verbinden von Kabeln eingesetzt werden kann. Das Verschlusssystem 1 umfasst ein Verschlussstück 3, ein Verschlussband 5 und eine Grifflasche 7. Das Band 5 und die Grifflasche 7 sind an dem Verschlussstück 3 befestigt und erstrecken sich in einander entgegengesetzte Richtungen von diesem Weg.

Das Band 5 kann so gebogen werden, dass es mit seiner Spitze 9 in eine in dem Verschlussstück 3 vorgesehene Öffnung 11 hineingesteckt werden kann. Das Band weist an seiner Vorderseite eine Vielzahl von Rastrippen 13 auf, welche mit einem von zwei Rastkörpern 15, 16 in Eingriff gelangen, wenn das Band 5 in die Öffnung 11 gesteckt wird. Sobald einer der beiden Rastkörper 15 in Eingriff mit den Rastrippen 13 gelangt, bilden diese zusammen eine Rastverbindung, welche ein weiteres Verschieben des Bandes 5 in der Öffnung 11 lediglich in die Einführrichtung des Bandes in die Öffnung erlaubt und ein Verschieben in die hierzu entgegengesetzte Richtung blockiert.

Die Rastrippen 13 sind auf der Vorderseite 14 des Bandes 5 zwischen Seitenstegen 18 angeordnet, welche sich an den beiden Seiten des Bandes über dessen Länge mit gleichförmigen Dicke d1 erstrecken. Es ist jedoch möglich, dass sich die Rastrippen 13 bis an die Ränder des Bandes 5 erstrecken.

Die Grifflasche 7 weist eine Breite b1 von mehr als 1,5 cm und eine Länge 11 von mehr als 1,5 cm auf, so dass das Verschlusssystem 1 von einem Benutzer durch Greifen an der Lasche 7 mit einer Hand einfach gehalten werden kann. Der Benutzer kann dann mit der anderen Hand das Band 5 in die Öffnung 11 sicher einstecken. In der Grifflasche 7 ist ein Loch 17 vorgesehen, welches dazu verwendet werden kann, an dem Verschlusssystem 1 ein Etikett oder dergleichen mit einer Schnur zu befestigen, oder um das Verschlusssystem 1 zusammen mit weiteren Verschlusssystemen beispielsweise an einem Dom oder eine Stange auf Vorrat zu halten.

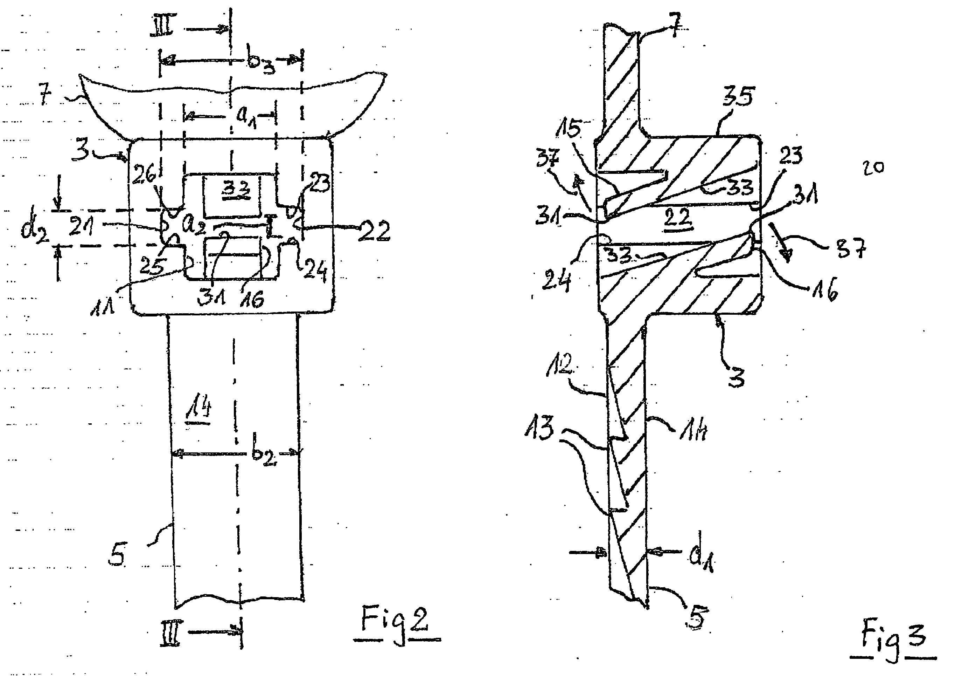

Details des Aufbaus des Verschlusssystems 1 werden nachfolgend anhand der Detailzeichnungen der Figuren 2 und 3 erläutert.

Das Band 5 weist eine Breite b2 und eine Dicke d1 auf. Die Dicke d1 kann beispielsweise 1 mm bis 3 mm betragen, und die Breite b2 kann beispielsweise 3 mm bis 10 mm betragen.

Die Öffnung 11 in dem Verschlussstück 3 ist teilweise durch Führungsflächen für das in die Öffnung 11 eingeführte Band 5 begrenzt. Zwei laterale Führungsflächen 21, 22 liegen einander in der Öffnung mit einem Abstand b3 gegenüber, der gleich groß oder etwas größer bemessen ist als die Breite b2 des Bandes, so dass die Lateral-Führungsflächen 21, 22 das in die Öffnung 11 eingeführte Band in Horizontalrichtung der Figur 2 führen. Ferner sind an dem Verschlussstück 3 zwei Transversal-Führungen 23, 24, 25 und 26 vorgesehen, welche das in die Öffnung 11 eingeführte Band 5 in der in Figur 2 vertikalen Richtung führen. Hierzu liegen sich die Transversal-Führungsflächen 23 und 24 bzw. 25 und 26 mit einem Abstand d2 gegenüber, der gleich groß oder etwas größer bemessen ist als die Dicke d1 des Bandes 5. Zwischen den Führungsflächen 24 und 25 ist, ebenso wie zwischen den Führungsflächen 23 und 26 ein Abstand a1 vorgesehen, der kleiner ist als die Breite b2 des Bandes 5, so dass die Transversal-Führungsflächen 23 bis 26 mit dem Band 5 lediglich an dessen seitlichen Rändern in Führungskontakt gelangen und das Band 5 insbesondere in dessen Mitte nicht stützen.

Die Rastkörper 15 und 16 umfassen jeweils eine Rastspitze 31, welche an einem Ende einer Rampenfläche 33 vorgesehen ist, wobei die Rastkörper 15, 16 jeweils an ihren der Rastspitze 31 entgegengesetzten Ende mit einem Körper 35 des Verschlussstücks 3 befestigt sind. Die Rastkörper 15, 16 weisen jeweils eine langgestreckte Gestalt auf, so dass die Rastspitzen 31 aus ihrer in Figur 3 gezeigten Ruhestellung jeweils in eine Richtung, welche in Figur 3 durch Pfeile 37 dargestellt sind, federnd ausgelenkt werden können.

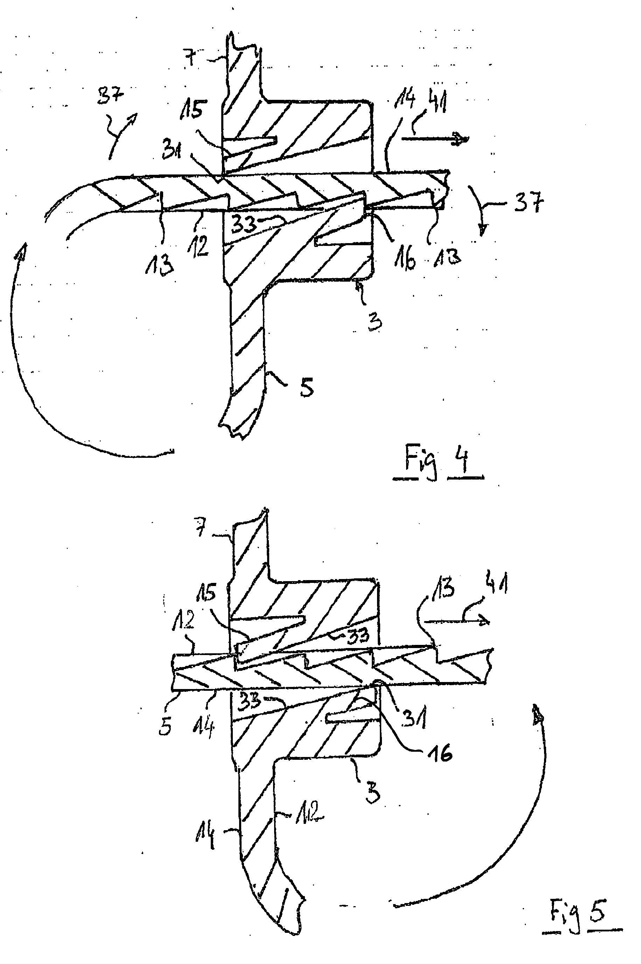

Beim Einschieben des Bandes 5 in die Öffnung 11 wird dieses seitlich durch die Lateral-Führungsflächen 21 und 22 sowie vertikal durch die Transversal-Führungsflächen 23 bis 26 spielfrei oder mit einem geeigneten Spiel geführt. Zudem kommt die Rastspitze 31 eines der beiden Rastkörper 15 oder 16 mit den Rastrippen 13 des Bandes in Rasteingriff, wie dies anhand der Figuren 4 und 5 nachfolgend erläutert wird.

Aus Figur 2 ist ersichtlich, dass die Rastspitzen 31 der beiden Rastkörper 15 und 16 in Projektion in die Zeichenebene der Figur 2 einen Abstand a2 voneinander aufweisen, welcher kleiner ist als die Dicke d1 des Bandes 5. Ferner ist aus Figur 3 ersichtlich, dass die Rastkörper 15 und 16 einander entgegen gerichtete Funktionsrichtungen aufweisen, da die Rastspitze 31 des Rastkörpers 15 in der Projektion auf die Zeichenebene der Figur 3 links neben der Rampenfläche 33 des Rastkörpers 15 angeordnet ist, während die Spitze 31 des Rastkörpers 16 rechts neben dessen Rampenfläche 33 angeordnet ist.

Figur 4 zeigt das anhand der Figuren 1 bis 3 erläuterte Verschlusssystem in einer Gebrauchsstellung, in welcher das Band 5 im Vergleich zu der Darstellung der Figur 3 nach links umgebogen und von vorne in das Verschlussstück 3 eingeführt wurde. Die Rastrippen 13 des Bandes 5 sind innerhalb der Öffnung 11 in Figur 4 unten angeordnet, und die Rastspitze 31 des Verschlussstücks (Rastkörpers) 16 greift in die Rastrippen 13 ein, und zwar derart, dass eine weitere Verschiebung des Bandes 5 innerhalb der Öffnung 11 in einer Richtung 41 möglich ist und in die hierzu entgegengesetzte Richtung durch den Rasteingriff verhindert ist. Eine weitere Verschiebung des Bandes 5 in die Richtung 41 ist deshalb möglich, weil die Rastrippen 13 an der Rampenfläche 33 des Rastkörpers 16 entlang gleiten können und hierbei die Rastspitze 31 des Rastkörpers 16 gegen die Federkraft in die Richtung 37 nach unten gedrückt wird, bis sich eine Rastrippe vollständig an der Rastspitze vorbei bewegt hat und die Rastspitze in eine Ausnehmung zwischen benachbarten Rastrippen hineinfedert. Bei einem Versuch der Bewegung des Bandes 5 innerhalb der Öffnung 11 in die der Richtung 41 entgegengesetzte Richtung liegt die Rampenfläche 33 des Rastkörpers 16 nicht an den Rastrippen 13 an und kann damit nicht dazu beitragen, die Rastspitze 31 in die Richtung 37 nach unten federnd einzudrücken, so dass die Bewegung des Bandes 5 die Richtung 41 in der Öffnung 11 durch Formschluss zwischen dem Rastkörper 16 und den Rastrippen 13 blockiert ist.

Der in Figur 3 obere Rastkörper 15 ist in der in Figur 4 gezeigten Betriebssituation unwirksam, da dessen Rastspitze 31 durch die Anlage an der glatten Rückseite 14 des Bandes 5 in die Richtung 37 nach oben gegen Federkraft ausgelenkt ist, wobei das Band 5 in die Richtung 41 und in die hierzu entgegengesetzte Richtung relativ zu der Rastspitze 31 des Rastkörpers 15 gleitend verlagerbar ist.

In Figur 5 ist eine Betriebssituation dargestellt, bei der das Band 5 entgegen der Richtung 41 von hinten in die Öffnung 11 des Rastkörpers 3 eingeführt ist. In dieser Situation sind die Rastrippen 13 in der Darstellung der Figur 5 in der Öffnung 11 oben angeordnet, während die glatte Rückseite 16 des Bandes unten angeordnet ist. Entsprechend ist der Rastkörper 16 unwirksam, da die Rückseite 16 des Bandes 5 entlang der Rastspitze 13 des Rastkörpers 16 gleitend verlagerbar ist. Dafür ist in dieser Situation der Rastkörper 15 zur Bildung der Rastverbindung zwischen Verschlussstück 3 und Band 5 wirksam, ähnlich wie dies unter Bezugnahme auf die Figur 4 für den Rastkörper 16 beschrieben wurde. Aufgrund der entgegengesetzten Wirkrichtungen der Rastkörper 15 und 16 ist dann allerdings das Band 5 durch die Rastverbindung gegenüber einem Herausziehen aus dem Verschlussstück 3 in die Richtung 41 blockiert, während es in die der Richtung 41 entgegen gesetzte Richtung weiter in das Verschlussstück 3 hineingeführt werden kann.

Das Band 5 kann somit von zwei einander entgegengesetzten Richtungen in die Öffnung des Verschlussstücks eingesetzt werden, nämlich, wie in Figur 4 dargestellt, von vorne in die Richtung 41, wobei ein Herausziehen entgegengesetzt zu der Richtung 41 blockiert ist, und, wie in Figur 5 dargestellt, von hinten entgegengesetzt zu der Richtung 41, wobei ein Herausziehen in die Richtung 41 blockiert ist. Im Vergleich zum herkömmlichen Kabelbinder weist das Verschlusssystem 1 somit eine vereinfachte Bedienbarkeit auf, da ein Benutzer nicht darauf achten muss, von welcher Seite er das Band in die Öffnung des Verschlusses einführt.

Figur 6 ist eine Schnittdarstellung eines Details des Verschlusssystems 1 in einem Zustand, in welchem das Band 5 von hinten (vgl. Figur 5) in die Öffnung 11 eingeführt ist und versucht wird, das Band 5 in Richtung 41 aus dem Verschlussstück 3 herauszuziehen. Hierbei drückt die Rastspitze 31 des Rastkörpers 15 im Bereich der Mitte des Bandes 5 in der Darstellung der Figur 6 von oben in einem Bereich der Mitte des Bandes gegen die Rastrippen 13. Andererseits ist ein Ausweichen des Bandes 5 nach unten durch die Anlage an den Führungsflächen 24 und 25 verhindert. Da die Führungsflächen 24 und 25 allerdings mit dem Abstand a1 voneinander derart angeordnet sind, dass sie das Band 5 lediglich an dessen Seiten abstützen und es in dessen Mitte nicht abstützen, führt die durch den Rastkörper 33 auf Grund des Zuges in die Richtung 41 ausgeübte Kraft zu einer Durchbiegung des Bandes, die in der Figur dargestellt ist. Die Durchbiegung des Bandes und die ausgeübte Zugkraft führen dazu, dass die Rastspitze 31 des Rastkörpers 15 entgegen deren Federrichtung 37 nach unten ausgelenkt wird. Übersteigt die Zugkraft in Richtung 41 einen vorbestimmten Wert, so führt die Auslenkung des Rastkörpers 15 entgegen dessen Federrichtung 37 zu einen Durchbrechen des Rastkörpers 15 oder einem Losreißen derselben von dem Körper 35 des Verschlussstücks 3. Es ist dann möglich, das Band 5 im Wesentlichen kräftefrei vollständig aus der Öffnung 11 des Verschlussstücks 3 zu ziehen.

Durch geeignetes Bemessen des Abstandes a1 zwischen den Führungsflächen 24 und 25, durch Wahl einer Härte des zur Bildung des Bandes 5 verwendeten Materials und Wahl von dessen Dicke d1 sowie eine Auswahl einer Geometrie und eines Materials für den Rastkörper 15 und durch Abstimmen dieser Eigenschaften aufeinander ist es möglich, eine Kraft auszuwählen, bei dessen Ausübung auf das Band die Rastverbindung zwischen Band und Verschlussstück aufbricht. Es hat sich gezeigt, dass die Einstellung einer gewünschten Bruchkraft bei der hier offenbarten Geometrie des Verschlussstücks mit relativ guter Reproduzierbarkeit möglich ist. Diese Einstellung einer Soll-Bruchkraft stellt für das Verbindungssystem 1 ein Sicherheitsmerkmal dar, da beim Auftreten einer zu großen Kraft auf durch das Verschlusssystem zusammengehaltenes Material das Verscblusssystem gelöst wird und das zusammengehaltene Material keinen Schaden nehmen muss. Zudem kann die Soll-Bruchkraft so eingestellt werden, dass sie durch einen Benutzer von Hand aufgebracht werden kann, so dass dieser eine versehentlich geschlossene Rastverbindung mit der Hand wieder lösen kann, ohne ein Spezial-Werkzeug, wie etwa eine Zange, zu Hilfe nehmen zu müssen.

Vorzugsweise sind der Abstand der beiden seitlichen Führungsflächen, eine Elastizität des Bandes und eine Elastizität der Rast-Körper so aufeinander abgestimmt, dass das in die Öffnung so eingesteckte Band unter Aufwendung einer Kraft von weniger als 400 N, insbesondere weniger als 300 N und insbesondere weniger als 200 N , gegen die Rastwirkung aus der Öffnung wieder herausgezogen werden kann.

In den vorangehend beschriebenen Ausführungsformen sind die Rastrippen 13 als Sägezahnrippen ausgebildet, welche auf einer Seite in Längsrichtung des Bandes flache Flanken aufweisen und in die hierzu entgegengesetzte Richtung des Bandes steile Flanken aufweisen. Es ist jedoch auch möglich, hiervon abzuweichen und Rastrippen vorzusehen, welche hiervon abweichende Steigungen ihre Flanken aufweisen oder gar symmetrisch mit gleich steilen Flanken in beide Richtungen oder verrundete Flanken aufweisen.

In den vorangehend beschriebenen Ausführungsformen ist der Rast-Körper als eine Federzunge ausgebildet, welche an ihrem einen Ende an dem Körper des Verschlussstücks angelenkt ist, eine Rampenfläche aufweist und an ihrem anderen Ende die Rastspitze aufweist. Es ist jedoch auch möglich, hiervon abweichende Geometrien des Rast-Körpers vorzusehen, wobei insbesondere auch mehrere Rast-Körper auf einer Seite des Verschlussstücks vorgesehen sein können. So kann beispielsweise der Rast-Körper als eine Rastrippe ausgebildet sein, welche auf Grund einer Elastizität ihres Materials in Zusammenwirkung mit den Rastrippen des Bandes die gewünschte Rastwirkung entfalten kann.

## Patentansprüche

1. Verbindungssystem umfassend:
ein sich in eine Längsrichtung erstreckendes Band (5), welches, gesehen im Querschnitt, eine Breite (b2) und eine Dicke (d,1) aufweist und wobei an wenigstens einer Längsseite (12) des Bandes (5) Rastrippen (13) vorgesehen sind, und
ein Verschlussstück (3) an welchem eine Öffnung (11) vorgesehen ist, in die das Band (5) in dessen Längsrichtung hineinsteckbar ist,
wobei das Verschlussstück (3) umfasst:
zwei Lateral-Führungen (21, 22) für das Band (5), welche, gesehen in Projektion in Längsrichtung des eingesteckten Bandes, sich mit einem Abstand (b3) gegenüberliegen, der der Breite (b2) des Bandes entspricht,
zwei Transversal-Führungen (23, 24, 25, 26) für das Band (5), welche, gesehen in Projektion in Längsrichtung des eingesteckten Bandes, sich mit einem Abstand (d2) gegenüberliegen, der der Dicke (d1) des Bandes (5) entspricht, und wenigstens ein Paar von Rast-Körpern (15,16), welche, gesehen in Projektion in Längsrichtung des eingesteckten Bandes, sich mit einem solchen Abstand (a2) gegenüberliegen, dass genau ein Rast-Körper (15, 16) des Paars bei eingestecktem Band (5) in die Rastrippen (13) des Bandes (5) eingreift,
wobei die Transversal-Führungen (23, 24, 25, 26) jeweils zwei seitliche Führungsflächen aufweisen, die mit einem Abstand (a1) voneinander angeordnet sind, so dass eine Mitte des eingesteckten Bandes (5) von den Transversal-Führungen (23, 24, 25, 26) nicht unterstützt ist,
**dadurch gekennzeichnet,**
**dass** der Abstand (a1) der beiden seitlichen Führungsflächen voneinander größer als 70 % der Breite des Bandes (5) ist, dass der Rast-Körper (15) in der Mitte des Bandes (5) in die Rastrippen (13) des Bandes (5) eingreift, wobei sich das Band (5) bei einem Zug auf das Band (5) in eine der Einführrichtung entgegengesetzte Richtung, mangels Stützung durch die Führungsflächen der Transversal-Führungen (23, 24, 25, 26) in der Mitte, in Querrichtung durchbiegt und dass das Verschlussstück (3) einstückig, insbesondere als Spritzgussteil, gefertigt ist.

2. Verbindungssystem nach Anspruch 1, wobei die Breite (b2) des Bandes größer ist als dessen Dicke (d1).

3. Verbindungssystem nach Anspruch 1 oder 2, wobei an lediglich einer Längsseite (12) des Bandes Rastrippen (13) vorgesehen sind.

4. Verbindungssystem nach einem der Ansprüche 1 bis 3, wobei das wenigstens eine Paar von Rast-Körpern (15, 16), gesehen in Projektion in Längsrichtung des eingesteckten Bandes (5), sich bei nicht eingestecktem Band (5) mit einem Abstand (a2) gegenüberliegt der kleiner ist als die Dicke (d1) des Bandes.

5. Verbindungssystem nach einem der Ansprüche 1 bis 4, wobei die Rast-Körper als Federelemente (15, 16) ausgebildet sind.

6. Verbindungssystem nach einem der Ansprüche 1 bis 5, wobei die Rast-Körper (15, 16) jeweils eine Rampenfläche (33) und eine Rastspitze (31) aufweisen, welche, gesehen in Projektion quer zu der Längsrichtung des eingesteckten Bandes, nebeneinander angeordnet sind.

7. Verbindungssystem nach einem der Ansprüche 1 bis 6, wobei die Rastspitze (31) des einen Rast-Körpers (15) des Paars, gesehen in Projektion quer zu der Längsrichtung des eingesteckten Bandes (5), in eine erste Richtung versetzt neben der Rampenflächen (33) des einen Rast-Körpers (15) angeordnet ist, während die Rastspitze (31) des anderen Rast-Körpers (16) des Paars, gesehen in der Projektion quer zu der Längsrichtung des eingesteckten Bandes (5), entgegen der ersten Richtung versetzt neben der Rampenflächen (33) des anderen Rast-Körpers (16) angeordnet ist.

8. Verbindungssystem nach Anspruch 6 oder 7, wobei das Verschlussstück (3) Schwenkgelenk umfasst, um die Rastspitzen (31) relativ zu den Transversal-Führungen verschwenkbar zu haltern.

9. Verbindungssystem nach Anspruch 8, wobei die Rastspitze (31) des einen Rast-Körpers (15) des Paars, gesehen in Projektion quer zu der Längsrichtung des eingesteckten Bandes, in eine erste Richtung versetzt neben dem diese Rastspitze (31) anlenkenden Schwenkgelenk angeordnet ist, während die Rastspitze (31) des anderen Rast-Körpers (16) des Paars, gesehen in der Projektion quer zu der Längsrichtung des eingesteckten Bandes, entgegen der ersten Richtung versetzt neben dem diese Rastspitze (31) anlenkende Schwenkgelenk angeordnet ist.

10. Verbindungssystem nach einem der Ansprüche 1 bis 9, wobei das Verschlussstück (3) und das Band (5) fest miteinander verbunden sind.

11. Verbindungssystem nach Anspruch 9, wobei das Verschlussstück und das Band einstückig, insbesondere als Spritzgussteil, gefertigt sind.

12. Verbindungssystem nach Anspruch 5 und ggf. nach einem der Ansprüche 6 bis 11, wobei eine Zugkraft gegen die Rastwirkung auf das eingesteckte Band (5) eine Kraft eines Rast-Körpers (15) auf das Band (5) und dadurch mangels Stützung des Bandes (5) in seiner Mitte eine Durchbiegung des Bandes (5) bewirkt, wobei die Zugkraft und die Durchbiegung eine Auslenkung des Rast-Körpers (15) entgegen dessen Federrichtung (37) bewirken und wobei bei einem Übersteigen der Zugkraft über einen vorbestimmten Wert die Auslenkung des Rast-Körpers (15) entgegen dessen Federrichtung (37) zu einem Durchbrechen des Rast-Körpers (15) oder einem Losreißen desselben führt.

13. Verbindungssystem nach einem der Ansprüche 1 bis 12, wobei der Abstand (a1) der beiden seitlichen Führungsflächen, eine Elastizität des Bandes (5) und, eine Elastizität der Rast-Körper (15,16) so aufeinander abgestimmt sind, dass das in die Öffnung (11) so eingesteckte Band (5) unter Aufwendung einer Kraft von weniger als 400 N, insbesondere weniger als 300 N und insbesondere weniger als 200 N, gegen die Rastwirkung aus der Öffnung (11) wieder herausgezogen werden kann.

14. Verbindungssystem nach einem der Ansprüche 1, 2 und 4 bis 13, wobei auf beiden Längsseiten (12) des Bandes (5) Rastrippen (113) vorgesehen sind.

## Claims

1. Connecting system comprising:
a band (5) which extends in a longitudinal direction and which, as seen in cross section, has a width (b2) and a thickness (d1) and wherein latching ribs (13) are provided on at least one longitudinal side (12) of the band (5), and
a closure piece (3) on which there is provided an opening (11) into which the band (5) can be inserted in the longitudinal direction thereof,
wherein the closure piece (3) comprises:
two lateral guides (21, 22) for the band (5) which, as seen in projection in the longitudinal direction of the inserted band, lie opposite one another with a distance (b3) which corresponds to the width (b2) of the band, two transverse guides (23, 24, 25, 26) for the band (5) which, as seen in projection in the longitudinal direction of the inserted band, lie opposite one another with a distance (d2) which corresponds to the thickness (d1) of the band (5), and
at least one pair of latching bodies (15, 16) which, as seen in projection in the longitudinal direction of the inserted band, lie opposite one another with such a distance (a2) that, with the band (5) inserted, exactly one latching body (15, 16) of the pair engages in the latching ribs (13) of the band (5),
wherein the transverse guides (23, 24, 25, 26) in each case have two lateral guide surfaces which are arranged with a distance (a1) from one another auch that a centre of the inserted band (5) is not supported by the transverse guides (23, 24, 25, 26),
**characterized in that**
the distance (a1) of the two lateral guide surfaces from one another is greater than 70% of the width of the band (5), **in that** the latching body (15) engages in the centre of the band (5) into the latching ribs (13) of the band (5) , wherein, when the band (5) is pulled in a direction opposite the insertion direction, the band (5) bends in the transverse direction for lack of support by the guide surfaces of the transverse guides (23, 24, 25, 26) in the centre, and **in that** the closure piece (3) is manufactured in one piece, in particular as an injection moulding.

2. Connecting system according to Claim 1, wherein the width (b2) of the band is greater than its thickness (d1).

3. Connecting system according to Claim 1 or 2, wherein latching ribs (13) are provided on only one longitudinal side (12) of the band.

4. Connecting system according to one of Claims 1 to 3, wherein, with the band (5) not inserted, the at least one pair of latching bodies (15, 16), as seen in projection in the longitudinal direction of the inserted band (5), lies opposite one another with a distance (a2) which is smaller than the thickness (d1) of the band.

5. Connecting system according to one of Claims 1 to 4, wherein the latching bodies are designed as spring elements (15, 16).

6. Connecting system according to one of Claims 1 to 5, wherein the latching bodies (15, 16) in each case have a ramp surface (33) and a latching tip (31) which, as seen in projection transversely to the longitudinal direction of the inserted band, are arranged next to one another.

7. Connecting system according to one of Claims 1 to 6, wherein the latching tip (31) of one latching body (15) of the pair, as seen in projection transversely to the longitudinal direction of the inserted band (5), is arranged offset in a first direction next to the ramp surfaces (33) of one latching body (15), while the latching tip (31) of the other latching body (16) of the pair, as seen in projection transversely to the longitudinal direction of the inserted band (5), is arranged offset counter to the first direction next to the ramp surfaces (33) of the other latching body (16).

8. Connecting system according to Claim 6 or 7, wherein the closure piece (3) comprises swivel joints in order to hold the latching tips (31) pivotably relative to the transverse guides.

9. Connecting system according to Claim 8, wherein the latching tip (31) of one latching body (15) of the pair, as seen in projection transversely to the longitudinal direction of the inserted band, is arranged offset in a first direction next to the swivel joint articulatedly connecting this latching tip (31), while the latching tip (31) of the other latching body (16) of the pair, as seen in projection transversely to the longitudinal direction of the inserted band, is arranged offset counter to the first direction next to the swivel joint articulatedly connecting this latching tip (31).

10. Connecting system according to one of Claims 1 to 9, wherein the closure piece (3) and the band (5) are fixedly connected to one another.

11. Connecting system according to Claim 9, wherein the closure piece and the band are manufactured in one piece, in particular as an injection moulding.

12. Connecting system according to Claim 5 and, if appropriate, according to one of Claims 6 to 11, wherein a pulling force counter to the latching effect on the inserted band (5) produces a force of a latching body (15) on the band (5) and, consequently, a bending of the band (5) for lack of support of the band (5) in its centre, wherein the pulling force and the bending produce a deflection of the latching body (15) counter to its spring direction (37), and wherein, if the pulling force exceeds a predetermined value, the deflection of the latching body (15) counter to its spring direction (37) results in the latching body (15) breaking open or tearing free.

13. Connecting system according to one of Claims 1 to 12, wherein the distance (a1) between the two lateral guide surfaces, an elasticity of the band (5) and an elasticity of the latching bodies (15, 16) are tailored to one another such that the band (5) thus inserted into the opening (11) can be extracted again from the opening (11) counter to the latching effect with the application of a force of less than 400 N, in particular less than 300 N and in particular less than 200 N.

14. Connecting system according to one of Claims 1, 2 and 4 to 13, wherein latching ribs (13) are provided on both longitudinal sides (12) of the band (5).

## Revendications

1. Système de connexion comprenant :
une bande (5) s'étendant dans la direction longitudinale, qui, vue en section transversale, présente une largeur (b2) et une épaisseur (d1), et des nervures d'encliquetage (13) étant prévues sur au moins un côté longitudinal (12) de la bande (5), et
un élément de fermeture (3) sur lequel est prévue une ouverture (11) dans laquelle la bande (5) peut être enfichée dans sa direction longitudinale,
l'élément de fermeture (3) comprenant :
deux guides latéraux (21, 22) pour la bande (5), lesquels, vus en projection dans la direction longitudinale de la bande enfichée, sont en regard l'un de l'autre à une distance (b3) qui correspond à la largeur (b2) de la bande,
deux guides transversaux (23, 24, 25, 26) pour la bande (5), qui, vus en projection dans la direction longitudinale de la bande enfichée, sont en regard l'un de l'autre à une distance (d2) qui correspond à l'épaisseur (d1) de la bande (5), et au moins une paire de corps d'encliquetage (15, 16), qui, vus en projection dans la direction longitudinale de la bande enfichée, sont en regard l'un de l'autre à une distance (a2) telle qu'exactement un corps d'encliquetage (15, 16) de la paire vienne en prise dans les nervures d'encliquetage (13) de la bande (5) lorsque la bande (5) est enfichée,
les guides transversaux (23, 24, 25, 26) présentant à chaque fois deux surfaces de guidage latérales qui sont disposées à une distance (a1) l'une de l'autre de telle sorte qu'un centre de la bande enfichée (5) ne soit pas supporté par les guides transversaux (23, 24, 25, 26),
**caractérisé en ce que**
la distance (a1) des deux surfaces de guidage latérales l'une de l'autre est supérieure à 70 % de la largeur de la bande (5), **en ce que** le corps d'encliquetage (15) vient en prise au milieu de la bande (5) dans les nervures d'encliquetage (13) de la bande (5), la bande (5) fléchissant dans la direction transversale lors d'une traction sur la bande (5) dans la direction opposée à la direction d'insertion en raison de l'absence de support par les surfaces de guidage des guides transversaux (23, 24, 25, 26) au milieu, et **en ce que** l'élément de fermeture (3) est fabriqué d'une seule pièce, notamment sous forme de pièce moulée par injection.

2. Système de connexion selon la revendication 1, dans lequel la largeur (b2) de la bande est supérieure à son épaisseur (d1).

3. Système de connexion selon la revendication 1 ou 2, dans lequel des nervures d'encliquetage (13) sont prévues sur seulement un côté longitudinal (12) de la bande.

4. Système de connexion selon l'une quelconque des revendications 1 à 3, dans lequel l'au moins une paire de corps d'encliquetage (15, 16), vue en projection dans la direction longitudinale de la bande enfichée (5), lorsque la bande (5) n'est pas enfichée, sont en regard l'un de l'autxe à une distance (a2) qui est inférieure à l'épaisseur (d1) de la bande.

5. Système de connexion selon l'une quelconque des revendications 1 à 4, dans lequel les corps d'encliquetage sont réalisés sous forme d'éléments de ressort (15, 16).

6. Système de connexion selon l'une quelconque des revendications 1 à 5, dans lequel les corps d'encliquetage (15, 16) présentent chacun une surface de rampe (33) et une pointe d'encliquetage (31), qui, vues en projection transversalement à la direction longitudinale de la bande enfichée, sont disposées l'une à côté de l'autre.

7. Système de connexion selon l'une quelconque des revendications 1 à 6, dans lequel la pointe d'encliquetage (31) de l'un des corps d'encliquetage (15) de la paire, vue en projection transversalement à la direction longitudinale de la bande enfichée (5), est disposée de manière décalée dans une première direction à côté des surfaces de rampe (33) de l'un des corps d'encliquetage (15), tandis que la pointe d'encliquetage (31) de l'autre corps d'encliquetage (16) de la paire, vue en projection transversalement à la direction longitudinale de la bande enfichée (5), est disposée de manière décalée à l'opposé de la première direction à côté des surfaces de rampe (33) de l'autre corps d'encliquetage (16).

8. Système de connexion selon la revendication 6 ou 7, dans lequel l'élément de fermeture (3) comprend des articulations pivotantes afin de retenir de manière pivotante les pointes d'encliquetage (31) par rapport aux guides transversaux.

9. Système de connexion selon la revendication 8, dans lequel la pointe d'encliquetage (31) de l'un des corps d'encliquetage (15) de la paire, vue en projection transversalement à la direction longitudinale de la bande enfichée, est disposée de manière décalée dans une première direction à côté de l'articulation pivotante articulant la pointe d'encliquetage (31), tandis que la pointe d'encliquetage (31) de l'autre corps d'encliquetage (16) de la paire, vue en projection transversalement à la direction longitudinale de la bande enfichée, est disposée de manière décalée à l'opposé de la première direction à côté de l'articulation pivotante articulant cette pointe d'encliquetage (31).

10. Système de connexion selon l'une quelconque des revendications 1 à 9, dans lequel l'élément de fermeture (3) et la bande (5) sont connectés fixement l'un à l'autre.

11. Système de connexion selon la revendication 9, dans lequel l'élément de fermeture et la bande sont fabriqués d'une seule pièce, en particulier sous forme de pièce moulée par injection.

12. Système de connexion selon la revendication 5 et éventuellement selon l'une quelconque des revendications 6 à 11, dans lequel une force de traction à l'encontre de l'action d'encliquetage sur la bande enfichée (5) provoque une force d'un corps d'encliquetage (15) sur la bande (5) et de ce fait, en raison de l'absence de support de la bande (5) en son centre, provoque une flexion de la bande (5), la force de traction et la flexion provoquant une déviation du corps d'encliquetage (15) à l'opposé de sa direction de ressort (37) et en cas de dépassement de la force de traction au-delà d'une valeur prédéterminée, la déviation du corps d'encliquetage (15) à l'opposé de sa direction de ressort (37) conduisant à une rupture du corps d'encliquetage (15) ou à une déchirure de celui-ci.

13. Système de connexion selon l'une quelconque des revendications 1 à 12, dans lequel la distance (a1) entre les deux surfaces de guidage latérales, une élasticité de la bande (5) et une élasticité des corps d'encliquetage (15, 16) sont ajustées les unes aux autres de telle sorte que la bande (15) ainsi enfichée dans l'ouverture (11) puisse à nouveau être ressortie de l'ouverture (11) en appliquant une force inférieure à 400 N, en particulier inférieure à 300 N et en particulier inférieure à 200 N, à l'encontre de l'action d'encliquetage.

14. Système de connexion selon l'une quelconque des revendications 1, 2 et 4 à 13, dans lequel on prévoit des nervures d'encliquetage (13) sur les deux côtés longitudinaux (12) de la bande (5).
